# EUROPEAN PATENT APPLICATION

(11) **EP 1 162 114 A2**
(43) Date of publication of application: **12.12.2001**
(21) Application number: 01113383.2
(22) Date of filing: 01.06.2001
(51) Int. Cl.: B60R 1/12

(54) **'An external rear-view mirror for a motor vehicle'**

(30) Priority: 08.06.2000 IT TO000546
(71) Applicant: ITALDESIGN-GIUGIARO S.p.A, 10121 Torino (IT)
(72) Inventor: Giugiaro, Fabrizio, 10024 Moncalieri (Torino) (IT)
(74) Representative: Fioravanti, Corrado

(57) **Abstract**

An external rear-view mirror (11) for a motor vehicle (10), comprises:
a support shell (12) in which is defined a cavity (13) having an opening (14),
a lamp (16) which is mounted in the cavity (13) and can emit a light beam that emerges from the cavity (13) through the opening (14), and
a partially reflective mirror (15) which is mounted on the shell (12) in the opening (14), and which can reflect light that falls onto it from the exterior and can transmit to the exterior the light emitted by the lamp (16).

## Description

The present invention relates to an external rear-view mirror device for a motor vehicle, as defined in Claim 1.

Preferred embodiments of the invention are defined in the dependent claims.

The structural and functional characteristics of a preferred but non-limiting embodiment of the device according to the invention will now be described with reference to the appended drawings, in which:
Figure 1 is a schematic, side elevational view of a vehicle provided with a device of the invention, in a first position,
Figure 2 is a view of the vehicle of Figure 1 with the device of the invention, arranged in a second position,
Figure 3 is a schematic perspective view of the rear-view mirror device according to the invention, and
Figure 4 shows the device of Figure 3 in longitudinal vertical section.

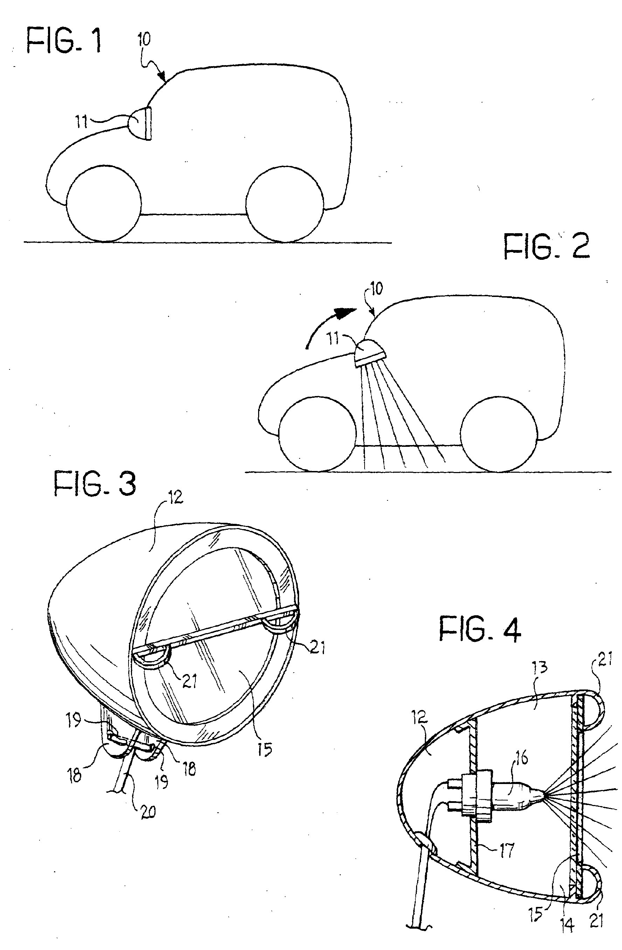

With reference initially to Figure 1, a motor vehicle, indicated 10, has an external rear-view mirror device according to the invention, generally indicated 11, mounted on one of its sides.

With reference also to Figures 3 and 4, the device 11 includes a substantially rigid, shell-like structure 12 defining an internal cavity 13 having an opening 14 in which a partially reflective mirror element 15 is mounted. The expression "partially reflective" is intended to be interpreted herein in the sense that the mirror 15 reflects the light which falls on it from the exterior, whereas it transmits to the exterior at least some of the light emitted by a lamp 16 mounted in the internal cavity 13 of the shell 12. The lamp 16 is preferably a halogen lamp.

The lamp 16 is supported in the cavity 13 by a support element 17 which holds the lamp in a position in which it is substantially centred on the geometrical axis which is perpendicular and central with respect to the plane in which the opening 14 lies.

In a possible alternative embodiment of the invention (not shown), the support element 17 may be adjustable by means of an electrical control disposed in the passenger compartment in a similar manner to devices commonly used for adjusting the inclination of rear-view mirrors; since these devices are known in the art, they need not be described in detail herein.

The lamp 16 is switched on and off from inside the passenger compartment by means of a suitable push-button (not shown).

With reference to Figures 1 and 2, the device 11 can be rotated from an operative, travelling position (Figure 1), in which it has the function of a rear-view mirror, to a position to which it is rotated downwards (Figure 2) and in which it has the function of a lamp for illuminating the ground and the side door of the vehicle.

Naturally, the restraint system for the articulated mounting of the device 11 on the vehicle 10 may be formed in various different ways, for example, by means of hinges, articulated joints, swivel joints and equivalent systems, as is known to those skilled in the art; for example, it is possible to use a bayonet joint which allows the device 11 to be locked in the normal travelling position of Figure 1 and to be rotated downwards to the position of Figure 2, or to adopt yet further orientations, for example, for directing the light forwards.

In the embodiment shown in Figure 3, a pair of tabs 18 extends downwards from the shell 12; arcuate slots 19 are formed in the tabs 18 and a horizontal support bracket 20 projecting from the side of the vehicle or from the side door is engaged therein.

In a preferred embodiment of the invention, the device 11 is mounted on the car 10 releasably so as to be detachable therefrom for use as an electric torch. For this purpose, the cavity 13 is arranged for housing a battery (not shown), which is preferably rechargeable by means of a conductor wire that connects the battery to the electrical system of the vehicle, in the mounted condition.

With further reference to Figure 4, the mirror 15 is preferably held on the shell 12 releasably by means of quick-clamping means such as resiliently flexible tabs 21 that enable the mirror 15 to be removed quickly when necessary in order to replace the lamp 16.

According to a further embodiment (not shown) the device of the present invention has an electrically-operated actuator for pivoting it selectively between the positions of Figures 1 and 2.

## Claims

1. An external rear-view mirror device (11) for a motor vehicle (10), **characterized in that** it comprises:
- a support structure (12) in which is defined a cavity (13) having an opening (14),
- a light source (16) which is mounted in the cavity (13) and can emit a light beam that can emerge from the cavity (13) through the opening (14), and
- a partially reflective element (15) which is mounted on the structure (12) in the opening (14), and which can reflect light that falls onto it from the exterior and can transmit to the exterior at least some of the light emitted by the source (16).

2. A device according to Claim 1, **characterized in that** it has a restraining means (18, 19) for mounting the device (11) on the vehicle (10) in an articulated manner, so that the device can adopt a first operative position in which the partially reflective element (15) faces rearwardly and at least one second operative position in which the light beam emitted by the source (16) is directed in a direction other than the rearward direction.

3. A device according to Claim 2, **characterized in that**, in the second operative position, the light beam is directed substantially downwards.

4. A device according to Claim 1, **characterized in that** it has a restraining means for mounting the device (11) on the vehicle (10) in a releasable and separable manner.

5. A device according to Claim 4, **characterized in that** the cavity (13) is arranged for housing a battery.

6. A device according to Claim 2, **characterized in that** it has electric actuating means for moving the device (11) between the first and second operative positions.

7. A device according to Claim 1, **characterized in that** the light source (16) is a halogen lamp.

8. A device according to Claim 1, **characterized in that** the reflective element (15) is held on the support structure (12) releasably by quick clamping means (21).

9. A device according to Claim 1, **characterized in that** the support structure (12) comprises a shell (12) defining the cavity (13).
